# EUROPÄISCHE PATENTSCHRIFT

(11) **EP 3 503 779 B1**
(45) Veröffentlichungstag und Bekanntmachung des Hinweises auf die Patenterteilung: **10.03.2021**
(21) Anmeldenummer: 17754647.0
(22) Anmeldetag: 03.08.2017
(51) Int. Cl.: A47J 43/07

(54) **MESSERHALTEFUSS ZUR VERBESSERTEN MISCHUNG VON ZU BEARBEITENDEM LEBENSMITTEL**
KNIFE HOLDER FOOT FOR AN IMPROVED MIXING OF FOOD TO BE PROCESSED
PIED PORTE-LAME PERMETTANT UN MEILLEUR MÉLANGE DES ALIMENTS À TRAVAILLER

(30) Priorität: 26.08.2016 DE 102016216103
(43) Veröffentlichungstag der Anmeldung: 03.07.2019
(73) Patentinhaber: BSH Hausgeräte GmbH, 81739 München (DE)
(72) Erfinder: STERGAR, David, 3342 Gornji Grad (SI); KOREN, Peter, 3331 Nazarje (SI); JEGRISNIK, Uros, 3313 Polzela (SI)
(86) Internationale Anmeldenummer: PCT/EP2017/069620
(87) Internationale Veröffentlichungsnummer: WO 2018/036776

(56) Entgegenhaltungen:
- WO-A1-00/13563
- GB-A- 2 506 394
- US-A- 5 584 577
- US-A1- 2010 071 219

## Beschreibung

Die vorliegende Erfindung betrifft einen Messerhaltefuß für eine Küchengerätekomponente, eine Küchengerätekomponente mit einem Messerhaltefuß und ein Küchengerät mit einer Küchengerätekomponente.

Elektromotorisch betriebene Küchengeräte wie beispielsweise eine Küchenmaschine oder ein Standmixer umfassen häufig eine lösbare Küchengerätekomponente, die ein Gefäß ausbildet, in dessen Innerem eine Messereinrichtung mit einem oder mehreren rotierbaren Messern zum Bearbeiten, beispielsweise Zerschnitzeln, Mahlen und/oder Verrühren von Lebensmitteln angeordnet ist. Das Gefäß weist dabei in der Regel einen Becher auf, an dem ein die Messereinrichtung umfassender Messerhaltefuß lösbar befestigt werden kann; der Becher wird dabei an seinem Boden durch einen Teil des Messerhaltefußes abgeschlossen.

Um eine vielseitige Verwendbarkeit des Messerhaltefußes, insbesondere eine gute Bearbeitung auch verschiedener Lebensmittel und insbesondere Lebensmittelkonsistenzen (flüssig, fest, unterschiedliche Härten und Größen der zu bearbeitenden Lebensmittelteile usw.) zu ermöglichen, ragen bekannte Messereinrichtungen in der Regel von einem Zentrum am Becherboden in das Innere des Bechers hinein. Darüber hinaus umfassen herkömmliche Messereinrichtungen häufig mehrere Messerflügel, die jeweils abgewinkelt sein können.

In der DE 10 2014 217241 A1 ist insbesondere eine Messeranordnung mit mehreren Messerflügeln offenbart, deren Schneiden sich jeweils in unterschiedlichen Radialebenen erstrecken (also in Ebenen senkrecht zur Rotationsachse). Dadurch können Lebensmittel in unterschiedlichem Abstand vom Boden von den Schneidkanten der Messer getroffen werden, was insbesondere bei relativ niedrigen Drehzahlen die Vielseitigkeit der Verwendung erhöht. Insbesondere kann ein Teil der Messer dicht über dem Becherboden rotieren. Auf diese Weise kann bei erhaltener Bearbeitung in vorteilhaft großem Abstand zum Boden gleichwohl verhindert werden, dass ein Teil des Lebensmittels unterhalb der rotierenden Messer seiner Bearbeitung entgeht.

Die Druckschrift GB 2506394 A offenbart einen Messerhaltefuß mit einem Basiselement, das an seiner äußeren Peripherie eine Auflagefläche für einen Dichtungsring sowie in seinem Zentrum einen Buckel aufweist, in den ein Ende einer Welle eingesetzt ist.

Aus der US 2010/0071219 A1 ist Saftmixer mit einer Messeranordnung bekannt, die zwei rotierbare Messer umfasst, von denen ein unteres nach oben gerichtete radial äußere Enden als Flussführungswände aufweist.

Die vorliegende Erfindung hat die Aufgabe, eine Technik bereitzustellen, mit der eine Durchmischung eines Lebensmittels, das jeweils von einer Küchengerätekomponente mit Messereinrichtung zu bearbeiten ist, weiter verbessert wird.

Die Aufgabe wird gelöst von einem Messerhaltefuß gemäß Anspruch 1, einer Küchengerätekomponente gemäß Anspruch 6 und einem Küchengerät gemäß Anspruch 7.

Vorteilhafte Ausführungsformen sind in den Unteransprüchen, der Beschreibung und den Figuren offenbart.

Ein erfindungsgemäßer Messerhaltefuß ist dazu eingerichtet, lösbar mit einem Becher einer Küchengerätekomponente verbunden zu werden. Der Messerhaltefuß umfasst eine Messereinheit mit mindestens einem rotierbaren Messer und eine Oberfläche, die dazu eingerichtet ist, nach einer Verbindung von Messerhalter und Becher mindestens einen Teil eines Becherbodens auszubilden, also einen Innenraum des Bechers mindestens teilweise bodenseitig abzuschließen. Ein Becher, mit dem verbunden zu werden der Messerhaltefuß eingerichtet ist, kann beispielsweise einen Boden mit einer Öffnung aufweisen, in die der Messerhalter einzusetzen ist, um die Öffnung zu schließen, oder der Becher kann selbst gar keinen Bodenabschnitt aufweisen, so dass ein Boden des Bechers erst durch eine Oberfläche des Messerhaltefußes ausgebildet wird. Insbesondere umfasst der Begriff "Becher" in dieser Schrift auch eine rohrartige (vorzugsweise einen Henkel umfassende) Wandung eines Gefäßes, das erst bei Befestigung des Messerhaltefußes einen Boden erhält.

Die Oberfläche eines erfindungsgemäßen Messerhaltefußes, die den Teil des Becherbodens abschließt, weist eine Reliefstruktur auf, ist also uneben; sie kann beispielsweise eine Mehrzahl an Buckeln oder Stufen aufweisen, die sich in Richtung der Messereinheit erheben.

Eine erfindungsgemäße Küchengerätekomponente umfasst einen Becher und einen lösbar mit dem Becher zu verbindenden Messerhaltefuß gemäß einer der in dieser Schrift offenbarten Ausführungsformen. Die Küchengerätekomponente kann insbesondere eine auf einen Adaptersockel aufsetzbare Komponente einer Küchenmaschine oder eines Standmixers sein.

Ein erfindungsgemäßes Küchengerät hat einen Elektromotor und umfasst eine erfindungsgemäße Küchengerätekomponente sowie einen Adaptersockel, mit dem der Messerhaltefuß der Küchengerätekomponente an den Elektromotor angeschlossen werden kann. Das Küchengerät kann beispielsweise eine Küchenmaschine oder ein Standmixer sein.

Im Betrieb der Messereinheit an einem erfindungsgemäßen Messerhaltefuß wird das jeweilige Lebensmittel von der rotierenden Messereinheit in Rotationsrichtung mitgeführt. Am Becherboden werden dabei infolge der Unebenheit der Oberfläche, die sich aus den Reliefstruktur ergibt, Verwirbelungen erzeugt, aufgrund deren das Lebensmittels vom Becherboden und in das mindestens eine rotierende Messer hinein angehoben und dort vom Messer getroffen wird. Insbesondere wird so eine besonders vorteilhafte Durchmischung und ggf. Zerkleinerung des zu bearbeitenden Lebensmittels erreicht.

Die Reliefstruktur kann unregelmäßig oder regelmäßig auf der Oberfläche ausgebildet sein. Erfindungsgemäß umfasst sie eine oder mehrere Stufen; als solche sind in dieser Schrift Erhebungen mit einer sich (in einer Ausrichtung des Messerhaltefußes bei bestimmungsgemäßer Verwendung) im Wesentlichen vertikal erstreckenden Stufenwand zu verstehen.

Gemäß des erfindungsgemäßen Messerhaltefußes weist eine oder weisen mehrere oder alle dieser Stufen jeweils eine Stufenkante auf, die sich gerade oder gekrümmt von einem zentralen Bereich der Oberfläche, der eine Welle der Messereinheit umrandet, zur Becherwand hin (nach außen) erstreckt, bis zu einem Rand der Oberfläche, der bei aufgesetztem Becher an diesen angrenzt. Eine derartige Stufenkante kann abgerundet und/oder angeschrägt sein. Sie kann radial verlaufen oder beispielsweise im Wesentlichen tangential zu einem die Rotationsachse der Messereinheit umlaufenden zentralen Ring; die Angaben "radial" und "axial" und beziehen sich, sofern nichts anderes angegeben ist, in dieser Schrift stets auf die Rotationsachse der Messereinheit.

Bei einer Ausführungsform mit einer oder mehreren gekrümmten Stufenkanten kann diese einen Bogen/ können diese jeweils Bögen ausbilden, die mit einer Schneidrichtung des mindestens einen Messers gekrümmt sind, also einen zentralen Bogenbereich aufweisen, der bezogen auf die Schneidrichtung weiter vorn angeordnet ist als die Randbereiche des Bogens. (Als Schneidrichtung ist dabei eine Rotationsrichtung des mindestens einen Messers bei einem vorgesehenen Zerkleinerungsvorgang zu verstehen, bei der also das Messer mit seiner Schneidkante voran rotiert.) Dadurch kann ein im Randbereich auf eine Stufenkante getriebenes Lebensmittel weiter in das Innere des Bechers hineingewirbelt werden.

Vorteilhaft ist eine Ausführungsform, bei der eine, zwei, drei, vier oder mehr Stufen jeweils eine Stufenwand aufweist/aufweisen, die (bei der Rotation des mindestens einen Messers in Schneidrichtung) einer Schneidkante eines auf sie zurotierenden Messers der Messereinheit zugewandt ist: Der Schneidrichtung des Messers folgend bildet die jeweilige Stufe somit eine Stufe nach oben aus. (Die Angaben "oben", "unten", "erheben", "absenken" und davon abgeleitete Begriffe beziehen sich in dieser Schrift - sofern nichts anderes angegeben ist - stets auf eine Ausrichtung des Messerhaltefußes bei bestimmungsgemäßer Verwendung). Bei einer derartigen Ausführungsvariante prallt ein von dem mindestens einen rotierenden Messer mitgerissenes Lebensmittel gegen die Stufenwand und wird damit vorteilhaft vom Becherboden weg aufgewirbelt.

Zwischen zwei derartigen Stufen mit einer Stufenwand, die einer Schneidkante eines auf sie zurotierenden Messers zugewandt ist, kann sich die Oberfläche (der Schneidrichtung folgend) gleichmäßig, in mehreren (Absenkungs-)Abschnitten absenken; derartige Absenkungsabschnitte können jeweils an einen ebenen und/oder einen (in der Schneidrichtung) ansteigenden Bereich angrenzen. Diese Variante bedingt eine zusätzliche Unregelmäßigkeit in der Bewegung des Lebensmittels und bewirkt so eine besonders ausgeprägte Verwirbelung.

Mindestens eine der Stufen kann eine konstante Stufenhöhe aufweisen und/oder mindestens eine der Stufen kann eine nach innen (zu einem zentralen Bereich hin) und/oder außen (also zur Becherwand) hin zunehmende Stufenhöhe haben; insbesondere kann so eine zusätzliche Verwirbelung von der Becherwand weg bewirkt werden.

Eine mittlere Stufenhöhe (also eine durch die Stufe ausgebildete Oberflächendifferenz in axialer Richtung) einer oder mehrerer der Stufen liegt vorzugsweise in einem Bereich 1mm bis 5mm, bevorzugter von 2mm bis 4mm: Durch eine Stufenhöhe in einem derartigen Rahmen kann einerseits eine vorteilhafte Verwirbelung wie beschrieben bewirkt werden, andererseits kann mindestens ein Messer der Messereinrichtung entsprechend dicht über den Boden geführt und somit das Lebensmittel im Bodenbereich bearbeitet werden.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: einen Messerhaltefuß gemäß einer exemplarischen Ausführungsform der vorliegenden Erfindung in perspektivischer Ansicht;
- Figur 2:: eine Wirkungsweise eines alternativen exemplarischen Messerhaltefußes; und
- Figur 3: ein Küchengerät gemäß einem Ausführungsbeispiel der vorliegenden Erfindung im Längsschnitt.

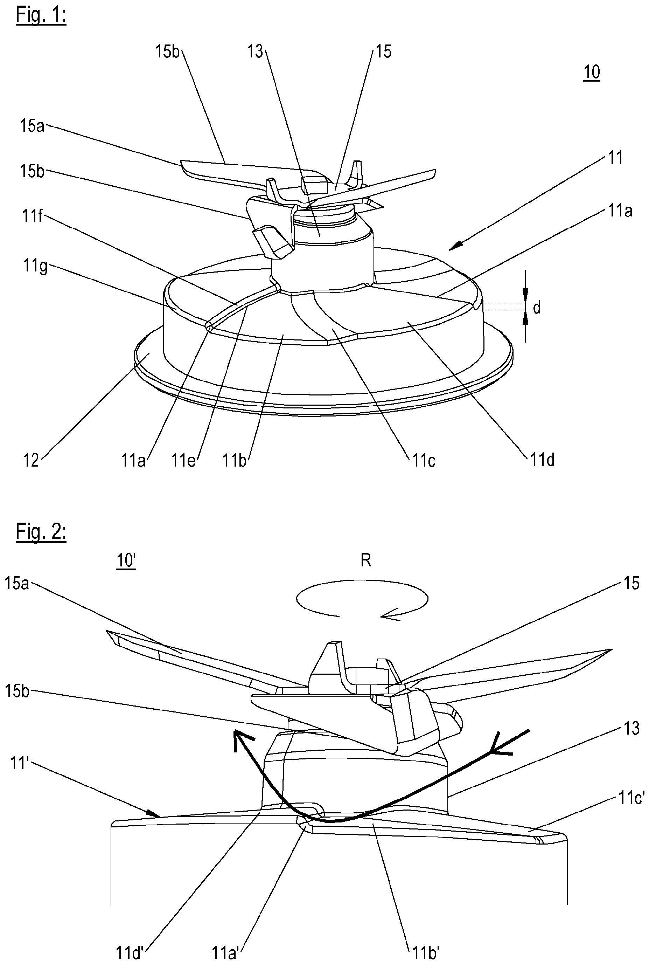

In Figur 1 ist in perspektivischer Darstellung ein Ausführungsbeispiel für einen erfindungsgemäßen Messerhaltefuß 10 gezeigt. Der Messerhaltefuß 10 umfasst eine rotierbare Messereinheit 15 mit mehreren Messern 15a, die jeweils eine Schneidkante 15b aufweisen. Bei Rotation der Messer 15a in eine für einen Zerkleinerungsbetrieb vorgesehene Schneidrichtung R werden die Messer dementsprechend mit ihren Schneidkanten 15b voran geführt.

Der Messerhaltefuß 10 ist dazu eingerichtet, lösbar mit einem Becher einer Küchengerätekomponente verbunden zu werden (in der Figur 1 nicht dargestellt). Insbesondere weist er eine ringartige Auflage 12 für einen Dichtring auf; bei einer Verbindung mit dem Becher wird ein Rand des Bechers vorzugsweise auf einem auf der Auflage 12 positionierten Dichtring (nicht dargestellt) angeordnet. Die Oberfläche 11 bildet dabei mindestens einen Teil eines Becherbodens aus, und ihr radial äußerer Rand 11g grenzt dabei an die Becherwand an.

Die Oberfläche 11 weist eine Reliefstruktur auf, die insbesondere drei Stufen 11a umfasst (von denen eine aufgrund der Perspektive der Figur 1 verdeckt ist). Die Stufen 11a haben jeweils eine Stufenwand 11e, die sich im Wesentlichen vertikal erstreckt und (bei der Rotation der Messer 15 in Schneidrichtung R) einer auf sie zurotierenden Schneidkante 15b zugewandt ist; der Schneidrichtung R der Messer folgend erhebt sich die Oberfläche in den Stufen 11a also zur Messereinheit hin. Dabei haben die Stufen 11a eine im Wesentlichen konstante Stufenhöhe d. Die Stufenhöhe kann vorteilhafterweise in einem Bereich von 1mm bis 5mm, bevorzugter von 2mm bis 4mm liegen. Zur leichteren Reinigung des Messerhaltefußes 10 ist die Stufenkante 11f der Stufen 11a jeweils abgerundet.

Zwischen je zwei Stufen 11a senkt sich die Oberfläche bezogen auf die Schneidrichtung wieder ab: Dabei bildet die Oberfläche zwischen benachbarten Stufen 11a jeweils Bereiche 11b und 11d aus, in denen sie im Wesentlichen in jeweiligen Radialebenen verläuft, sowie einen Absenkungsabschnitt 11c, in dem sie sich (bezogen auf die Schneidrichtung R) schräg zu den Radialebenen absenkt.

Die Stufen 11a und die Absenkungsabschnitte 11c verlaufen dabei jeweils entlang einem mit Schneidrichtung gekrümmten Bogen, der sich von einem ringartigen, eine Welle der Messereinheit umgebenden zentralen Bereich 13 nach außen hin (im gezeigten Beispiel bis zu einem Rand 11g der Oberfläche 11, der an eine vorgesehene Wandung des Bechers angrenzt) erstreckt. In einem am ringartigen Bereich 13 liegenden Stufenbereich der Stufen 11a verlaufen diese dabei im Wesentlichen radial, wohingegen die Absenkungsabschnitte 11c am ringartigen Bereich 13 jeweils zur (bezogen auf die Schneidrichtung R) weiter vorn angeordneten Stufe 11a hin verschoben sind. Der Bereich 11d, zu dem hin sich die Stufe 11a erhebt, ist daher größer als der Bereich 11b, von dem aus sich die Stufe 11a erhebt. Dadurch wird ein vorteilhaft kleiner Verwirbelungsradius eines im Betrieb der Küchengerätekomponente mit dem Messerhaltefuß 10 bearbeiteten Lebensmittels bewirkt.

In Figur 2 ist ein alternativer exemplarischer erfindungsgemäßer Messerhaltefuß 10' gezeigt. Dabei ist eine vorteilhafte, durch die stufige Oberfläche 11' bewirkte Strömung und damit Verwirbelung eines Lebensmittels durch Pfeile kenntlich gemacht: Die in Schneidrichtung R rotierenden Messer 15a treiben das Lebensmittel nach unten (auf die Oberfläche 11' zu) und gegen die einer Schneidkante 15b zugewandte Stufenwand einer Stufe 11a'. Von dieser wird der Lebensmittelstrom nach oben umgelenkt, also von der Oberfläche 11' weg und in die rotierenden Messer hinein. So wird das Lebensmittel erneut zerteilt bzw. vorteilhaft durchmischt.

Im Unterschied zur in der Figur 1 gezeigten Ausführungsform verläuft die Oberfläche 11' beim Messerhaltefuß 10' im Bereich 11b', von dem ausgehend sich eine Stufe 11a' erhebt, nicht entlang einer Radialebene, sondern sie steigt axial (in Richtung auf die Messereinrichtung 15 zu) bereits leicht an. Dies ermöglicht eine besonders sanfte Umlenkung der Strömung des Lebensmittels. Im Absenkungsabschnitt 11c' senkt sich die Oberfläche in Schneidrichtung R wieder ab.

Ausgehend von ihrem äußeren Rand steigen die Bereiche 11b' und 11d' und der Absenkungsabschnitt 11c' zudem nach innen (auf einen zentralen Bereich 13 zulaufend) an.

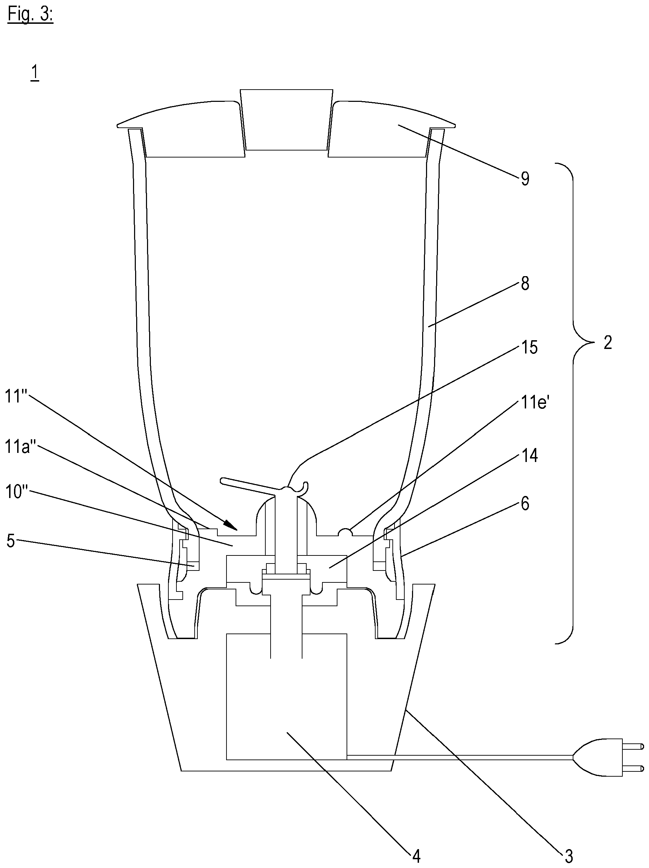

In Figur 3 ist ein axialer Querschnitt durch ein exemplarisches Küchengerät 1 gemäß einer Ausführungsform der vorliegenden Erfindung vereinfacht dargestellt; beim gezeigten Beispiel handelt es sich um einen Standmixer, der einen Adaptersockel 3 und eine Mixerkomponente 2 umfasst, die als erfindungsgemäße Küchengerätekomponente ausgebildet ist. Die Mixerkomponente 2 umfasst einen Becher 8 mit einem Deckel 9 sowie einen vom Becher ablösbaren erfindungsgemäßen Messerhaltefuß 10", der in der gezeigten Situation mittels eines Haltekranzes 6 am Becher befestigt und so auf den Adaptersockel 3 aufgesetzt ist. Der Messerhaltefuß umfasst eine Kupplung 14, über die eine vom Elektromotor 4 angetriebene Rotation auf die Messereinrichtung 15 übertragen werden kann.

Der Messerhaltefuß 10 weist eine Oberfläche 11" mit einer unregelmäßigen Reliefstruktur auf. In der Schnittdarstellung der Figur 3 sind dabei eine Stufe 11a" und ein Buckel 11e" zu erkennen.

Ein erfindungsgemäßer Messerhaltefuß 10, 10', 10" ist dazu eingerichtet, lösbar mit einem Becher einer Küchengerätekomponente verbunden zu werden. Er umfasst eine Messereinheit 15 mit mindestens einem rotierbaren Messer 15a und eine Oberfläche 11, 11', 11", die dazu eingerichtet ist, nach einer Verbindung von Messerhalter und Becher mindestens einen Teil eines Becherbodens auszubilden. Die Oberfläche weist eine Reliefstruktur auf.

Eine erfindungsgemäße Küchengerätekomponente umfasst einen Becher 8 und einen lösbar mit dem Becher zu verbindenden erfindungsgemäßen Messerhaltefuß 10. Ein erfindungsgemäßes Küchengerät 1 umfasst einen Elektromotor 4, eine erfindungsgemäße Küchengerätekomponente 2 und einen Adaptersockel 3 zum Anschließen des Messerhaltefußes 10 der Küchengerätekomponente 2 an den Elektromotor.

### Bezugszeichen

- 1: Standmixer
- 2: Standmixerkomponente
- 3: Adaptersockel
- 4: Elektromotor
- 5: Dichtring
- 6: Haltekranz
- 8: Becher
- 9: Deckel

- 10, 10', 10": Messerhaltefuß
- 11, 11', 11": Oberfläche
- 11a, 11a', 11a": Stufe
- 11b, 11b', 11d, 11d': Bereich der Oberfläche
- 11c, 11c': Absenkungsabschnitt der Oberfläche
- 11e: Stufenwand
- 11e": Buckel
- 11f: Stufenkante
- 11g: radial äußerer Rand der Oberfläche
- 12: Auflage für einen Dichtring
- 13: zentraler Bereich
- 14: Kupplung
- 15: Messereinrichtung
- 15a: Messer
- 15b: Schneidkante

- d: Stufenhöhe
- R: Schneidrichtung

## Patentansprüche

1. Messerhaltefuß (10, 10', 10") zur lösbaren Verbindung mit einem Becher einer Küchengerätekomponente, wobei der Messerhaltefuß eine Messereinheit (15) mit mindestens einem rotierbaren Messer (15a) umfasst und eine Oberfläche (11, 11', 11") aufweist, die dazu eingerichtet ist, nach einer Verbindung von Messerhalter und Becher mindestens einen Teil eines Becherbodens auszubilden,
**dadurch gekennzeichnet, dass** die Oberfläche eine Reliefstruktur aufweist, die eine oder mehrere Stufe/n (11a, 11a', 11a") jeweils mit einer Stufenkante (11f) umfasst, die sich gerade oder gekrümmt von einem zentralen Bereich (13) der Oberfläche (11, 11', 11"), der eine Welle der Messereinheit (15) umgibt, nach außen bis zu einem Rand (11g) der Oberfläche (11, 11', 11") erstreckt.

2. Messerhaltefuß gemäß Anspruch 1, wobei mindestens eine der Stufen eine einer Schneidkante (15b) des mindestens einen Messers (15a) zugewandte Stufenwand (11e) aufweist.

3. Messerhaltefuß gemäß Anspruch 2, wobei sich die Oberfläche (11, 11', 11") zwischen zwei Stufen, die jeweils eine einer Schneidkante des mindestens einen Messers (15a) zugewandte Stufenwand (11e) aufweisen, gleichmäßig oder in mehreren Abschnitten (11c, 11c') absenkt.

4. Messerhaltefuß gemäß einem der Ansprüche 1 bis 3, wobei mindestens eine der Stufen (11a, 11a') eine konstante Stufenhöhe (d) aufweist und/oder wobei mindestens eine der Stufen eine nach innen und/oder außen hin zunehmende Stufenhöhe aufweist.

5. Messerhaltefuß gemäß einem der vorhergehenden Ansprüche, wobei mindestens eine der Stufen (11a, 11a') eine mittlere Stufenhöhe (d) hat, die im Bereich 1mm bis 5mm, bevorzugter von 2mm bis 4mm liegt.

6. Küchengerätekomponente (2), die einen Becher (8) und einen lösbar mit dem Becher zu verbindenden Messerhaltefuß (10, 10', 10") gemäß einem der vorhergehenden Ansprüche umfasst.

7. Küchengerät (1) mit einem Elektromotor (4), einer Küchengerätekomponente (2) gemäß Anspruch 6 und einem Adaptersockel (3) zum Anschließen des Messerhaltefußes (10, 10', 10") an den Elektromotor.

## Claims

1. Knife holder foot (10, 10', 10") for detachable connection to a jug of a kitchen device component, wherein the knife holder foot comprises a blade unit (15) having at least one rotatable blade (15a) and has a surface (11, 11', 11") which is designed, following connection of the blade holder and jug, to form at least part of a jug base,
**characterised in that** the surface has a relief structure which comprises one or more steps (11a, 11a', 11a"), each having a step edge (11f) which extends outwardly in a straight or curved line from a central region (13) of the surface (11, 11', 11") which surrounds a shaft of the blade unit (15), as far as an edge (11g) of the surface (11, 11', 11").

2. Knife holder foot according to claim 1, wherein at least one of the steps has a step wall (11e) facing a cutting edge (15b) of the at least one blade (15a).

3. Knife holder foot according to claim 2, wherein the surface (11, 11', 11") becomes lower evenly or in multiple sections (11c, 11c') between two steps, each of which has a step wall (11e) facing a cutting edge of the at least one blade (15a).

4. Knife holder foot according to one of claims 1 to 3, wherein at least one of the steps (11a, 11a') has a constant step height (d) and/or wherein at least one of the steps has a step height increasing inwards and/or outwards.

5. Knife holder foot according to one of the preceding claims, wherein at least one of the steps (11a, 11a') has an average step height (d) which lies in the range between 1 mm and 5 mm, more preferably between 2 mm and 4 mm.

6. Kitchen device component (2), which comprises a jug (8) and a knife holder foot (10, 10', 10") detachably connected to the jug according to one of the preceding claims.

7. Kitchen device (1) having an electric motor (4), a kitchen device component (2) according to claim 6 and an adapter socket (3) for connecting the knife holder foot (10, 10', 10") to the electric motor.

## Revendications

1. Pied porte-lame (10, 10', 10") pour la liaison amovible avec un bol d'un composant d'appareil de cuisine, dans lequel le pied porte-lame comprend une unité à couteau (15) avec au moins un couteau rotatif (15a) et une surface (11, 11', 11"), aménagée afin de former, après une liaison du porte-lame au bol, au moins une partie d'un fond de bol, **caractérisé en ce que** la surface présente une structure en relief comprenant un ou plusieurs niveau(x) (11a, 11 a', 11 a") respectivement avec un bord de niveau (11f) s'étendant de façon droite ou courbée d'une zone centrale (13) de la surface (11, 11', 11"), qui entoure un arbre de l'unité à couteau (15), vers l'extérieur jusqu'à un bord (11g) de la surface (11, 11', 11").

2. Pied porte-lame selon la revendication 1, dans lequel au moins un des niveaux présente une paroi de niveau (11e) dirigée vers un bord de coupe (15b) de l'au moins un couteau (15a).

3. Pied porte-lame selon la revendication 2, dans lequel la surface (11, 11', 11") s'abaisse de façon uniforme ou en plusieurs sections (11c, 11c') entre deux niveaux présentant respectivement une paroi de niveau (11e) dirigée vers un bord de coupe de l'au moins un couteau (15a).

4. Pied porte-lame selon l'une des revendications 1 à 3, dans lequel au moins un des niveaux (11a, 11a') présente une hauteur de niveau constante (d) et/ou dans lequel au moins un des niveaux présente une hauteur de niveau augmentant vers l'intérieur et/ou l'extérieur.

5. Pied porte-lame selon l'une des revendications précédentes, dans lequel au moins un des niveaux (11a, 11a') possède une hauteur de niveau moyenne (d) se trouvant dans la plage de 1 mm à 5 mm, de préférence de 2 mm à 4 mm.

6. Composant d'appareil de cuisine (2) comprenant un bol (8) et un pied porte-lame (10, 10', 10") à relier de façon amovible au bol, selon l'une quelconque des revendications précédentes.

7. Appareil de cuisine (1) avec un moteur électrique (4), un composant d'appareil de cuisine (2) selon la revendication 6 et un socle d'adaptation (3) pour connexion du pied porte-lame (10, 10', 10") au moteur électrique.
